# EUROPÄISCHE PATENTSCHRIFT

(11) **EP 1 507 228 B1**
(45) Veröffentlichungstag und Bekanntmachung des Hinweises auf die Patenterteilung: **26.04.2006**
(21) Anmeldenummer: 04013600.4
(22) Anmeldetag: 09.06.2004
(51) Int. Cl.: G06K 7/10

(54) **Optischer Codeleser**
Optical code reader
Lecteur de codes optiques

(30) Priorität: 12.08.2003 DE 10337329
(43) Veröffentlichungstag der Anmeldung: 16.02.2005
(73) Patentinhaber: SICK AG, 79183 Waldkirch (DE)
(72) Erfinder: Runge, Wolfgang, 79104 Freiburg (DE)
(74) Vertreter: Ludewigt, Christoph

(56) Entgegenhaltungen:
- WO-A-01/72028
- US-A- 5 504 317
- SMITH W J: "ANAMORPHIC SYSTEMS" MODERN OPTICAL ENGINEERING, MC GRAW - HILL BOOK COMPANY, NEW YORK, NY, US, 1966, Seiten 239-241, XP000563067

## Beschreibung

Die Erfindung betrifft einen Scanner, insbesondere zur Erfassung von ein- und/oder von zweidimensionalen Codes mit einer Empfangsoptik, die das Bild einer Leselinie auf einer linienförmigen Anordnung von mehreren Photoempfängem entwirft und einer Beleuchtungsanordnung, mit der die gesamte Leselinie linienförmig ausgeleuchtet wird.

Derartige aus dem Stand der Technik bekannte Scanner, auch Linienscanner genannt, können eindimensionale Code die sich in der Leselinie befinden identifizieren, ohne dass eine Relativbewegung zwischen Scanner und Code erfolgen muss.

Wird der Code jedoch mittels einer Förderbewegung am Scanner vorbeigeführt, ist dieser aufgrund der Relativbewegung in der Lage, auch zweidimensionale Codes zu erfassen.

Scanner, nach dem vorstehend beschriebenen Funktionsprinzip, weisen oftmals den Nachteil auf, dass infolge unzureichender Lichtverhältnisse, bzw. Beleuchtungsstärke in der Leselinie, die Codes nur fehlerhaft, unvollständig oder im Grenzfall überhaupt nicht identifiziert werden können.
Auch wenn eine geringe Beleuchtungsstärke mit einer längeren Belichtungszeit ausgeglichen werden könnte, hat dies zur Folge, dass dadurch die Lesegeschwindigkeit reduziert wird. Besonders in der Fördertechnik, einem großen Einsatzgebiet für diese Scanner, sind diese, die Fördergeschwindigkeit reduzierenden Einflüsse, von großem Nachteil. Um diese Einschränkung zu umgehen, werden die Codes nach dem Stand der Technik mit energiereichen Lichtquellen, zum Beispiel Natriumdampflampen, Laserdioden, bzw. vielen diffus abstrahlenden LED's beleuchtet, was wiederum einen großvolumigen, teueren Scanner zur Folge hat, der darüber hinaus einen hohen elektrischen Leistungsverbrauch hat und eine starke Eigenerwärmung verursacht.

Auch ist beispielsweise aus der WO 01/72028 ein optischer Scanner bekannt, der zur Ausleuchtung der Leselinie das Licht mehrerer Lichtquellen mit einer Zylinderlinse zu einer Leselinie formt. Durch den Einsatz von nur einer relativ langbrennweitigen Zylinderlinse als strahlformendes optisches Element wird jedoch ein verhältnismäßig großer Anteil des von den Lichtquellen ausgesandten Lichtes nicht auf der Leselinie konzentriert, was letztlich zu einer nicht sehr effizienten Ausleuchtung der Leselinie führt.
Des Weiteren ist aus der US 5,504,317 bekannt, mittels einer Zylinderlinse das Licht mehrerer Lichtquellen auf eine Leselinie zu konzentrieren. Hierbei wird die Beleuchtungsanordnung relativ nahe der Leselinie angeordnet ist. Damit jedoch diese Beleuchtungsoptik den Empfangsstrahlengang nicht behindert, sind die Beleuchtungsoptik und die Empfangsoptik unter einem Winkel zueinander ausgerichtet. Um die dadurch zwangsläufig auftretende Parallaxe zwischen Beleuchtungs- und Empfangsstrahlengang insbesondere bei verändertem Leseabstand auszugleichen, ist es notwendig, die Lesebene nicht linienförmig sondern in Form einer langgezogenen Fläche auszuleuchten. Dadurch wird das von den Lichtquellen ausgesandte Licht nicht nur auf der Leselinie, sondern auf einer Lesefläche konzentriert wodurch sich die Effizienz der Beleuchtungsanordnung sehr verringert.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welches üblicherweise für den Betrieb dieser Scanner eingesetzt werden kann.

Der Erfindung liegt die Aufgabe zugrunde, mit optischen Mitteln die Effizienz der Beleuchtungsanordnung derart zu steigern, dass mit wenigen Lichtquellen, die mit geringem Energieeinsatz betrieben werden, eine ausreichend hohe Beleuchtungsstärke erzeugt wird, die das sichere Erkennen der Codes in möglichst kurzer Zeit ermöglicht.

Zur Lösung dieser Aufgabe sieht die Erfindung einen Scanner mit einer Empfangsoptik vor, die das Bild einer Leselinie auf einer linienförmigen Anordnung von mehreren Photoempfängem entwirft, und einer Beleuchtungsanordnung, mit der die gesamte Leselinie linienförmig mit mehreren nebeneinander in einer Linie angeordneten, im Wesentlichen punktförmigen Lichtquellen, ausgeleuchtet wird, wobei erfindungsgemäß die Beleuchtungsanordnung eine anamorphotischen Beleuchtungsoptik, zur Erzeugung einer linienförmige Beleuchtungslinie, aufweist.

Der Vorteil dieser erfinderischen Beleuchtungsanordnung ist darin zu sehen, dass durch den Einsatz der speziellen anamorphotischen Beleuchtungsoptik, die von den Lichtquellen abgegebenen Strahlung weitgehend vollständig nur auf die Beleuchtungslinie konzentriert wird. Die dadurch erzielbare hohe Beleuchtungsstärke in der Beleuchtungslinie erlaubt nicht nur eine kurze Belichtungs- und somit Codelesezeit, sondern erhöht gleichzeitig den Abstand des Nutzlichtes zum störenden Umgebungslicht.

Bevorzugt ist es, wenn die anamorphotische Beleuchtungsoptik aus einem mindestens zweistufigen Abbildungssystem zusammengesetzt ist. Erfindungsgemäß handelt es sich dabei um eine kurzbrennweitige torische Konvexlinse in der unmittelbaren Nähe jeder einzeinen Lichtquelle zur Strahlformung in der Meridionalebene und in einem größeren Abstand, eine die Lichtabstrahlung aller Lichtquellen erfassende langbrennweitige, refraktive Zylinderlinse, welche die Strahlformung in der Sagittalebene beeinflusst. Von Vorteil ist es, wenn die kurzbrennweitige torische Konvexlinse in ihrem Meridionalschnitt eine asphärische Kontur aufweist, weil damit das Öffnungsverhältnis verbessert und/oder die sphärische Aberration verringert werden kann.

Von Vorteil ist es femer, wenn die Funktion der zweiten langbrennweitigen refraktiven Zylinderlinse, welche gemeinsamen für alle Lichtquellen die Strahlführung in der Sagittalebene bestimmt, von einem Hohlzylinderspiegel mit rundem oder parabolischem Querschnitt erzeugt wird. Durch diese Maßnahme ist es möglich, insbesondere bei Verwendung eines parabolischen Querschnittes, die optisch wirksame Öffnung des Hohlzylinderspiegels im Verhältnis zur seiner Brennweite auf einen Wert von über 1:0,5 zu erweitem, was einer numerischen Apertur von größer 1 entspricht.
Es ist somit mittels einer einfachen Optikkomponente möglich, einen Großteil der von allen eingesetzten Lichtquellen abgegebenen Strahlung auf die Beleuchtungslinie zu konzentrieren.

Besonders vorteilhaft ist es, wenn die optischen Komponenten der anamorphotischen Beleuchtungsoptik zumindest teilweise diffraktive optische Elemente sind oder als Fresnel-Linsen in Spritz- bzw. Prägetechnik hergestellt werden.

Ein weiterer Vorteil der Erfindung ist darin zu sehen, dass in Abhängigkeit von der Aufgabenstellung über die Anzahl und die räumliche Dichte der Lichtquellen, zusammen mit den kurzbrennweitigen torischen Konvexlinsen, die Gesamtlänge der Beleuchtungslinie in weiten Grenzen an die Aufgabenstellung angepasst werden kann.

Vorteilhaft ist femer, dass durch die räumliche Dichte der Lichtquellen zusammen mit einer optimierten Dimensionierung der kurzbrennweitigen torischen Konvexlinsen die Überlappung der durch die einzelnen Lichtquellen erzeugten Teilbeleuchtlinien so bestimmt werden kann, dass diese in der resultierenden Beleuchtungslinie von allen Lichtquellen eine weitgehend homogene Beleuchtungsstärke in Längsrichtung aufweist.

Ein weiterer Vorteil dieser zweistufigen anamorphotischen Beleuchtungsoptik liegt darin, dass über den Abbildungsmaßstab der in der Sagittalebene wirksamen Zylinderoptik die Breite der Beleuchtungslinie bestimmbar ist. Dadurch ist es möglich, die Beleuchtungslinie optimal auf die Breite der Leselinie des Scanners anzupassen.

Eine besonders unter dem Gesichtspunkt der wirtschaftlichen Herstellbarkeit bevorzugte Ausführungsform ist dann gegeben, wenn die einzelnen den Lichtquellen zugeordneten kurzbrennweitigen torischen Konvexlinsen zur Strahlformung in der Meridionalebene einstückig als Linsenarray ausgebildet sind. In diesem Fall können zum Beispiel mehrere LED's, die auf einer Linie in definiertem Abstand beispielsweise auf einer Leiterplatte angeordnet sind, in einem Arbeitsgang mit den kurzbrennweitigen torischen Konvexlinsen zusammengefügt werden.

Die Erfindung wird im Folgenden beispielhaft unter Bezugnahme auf die Figuren erläutert; in diesen zeigen:
- **Fig. 1**: eine schematische Draufsicht auf einen Scanner mit der erfindungsgemäßen Beleuchtungsanordnung in V-Anordnung,
- **Fig. 2**: eine Seitenansicht des Scanners gemäß Fig. 1,
- **Fig. 3**: eine schematische Draufsicht auf einen Scanner mit der erfindungsgemäßen Beleuchtungsanordnung in koplanarer Anordnung,
- **Fig. 4**: eine Seitenansicht des Scanners gemäß Fig. 3,
- **Fig. 5**: einen Schnitt durch die anamorphotische Beleuchtungsoptik in der Meridionalebene, und
- **Fig. 6**: einen Schnitt in der Sagittalebene durch die anamorphotischen Beleuchtungsoptik.

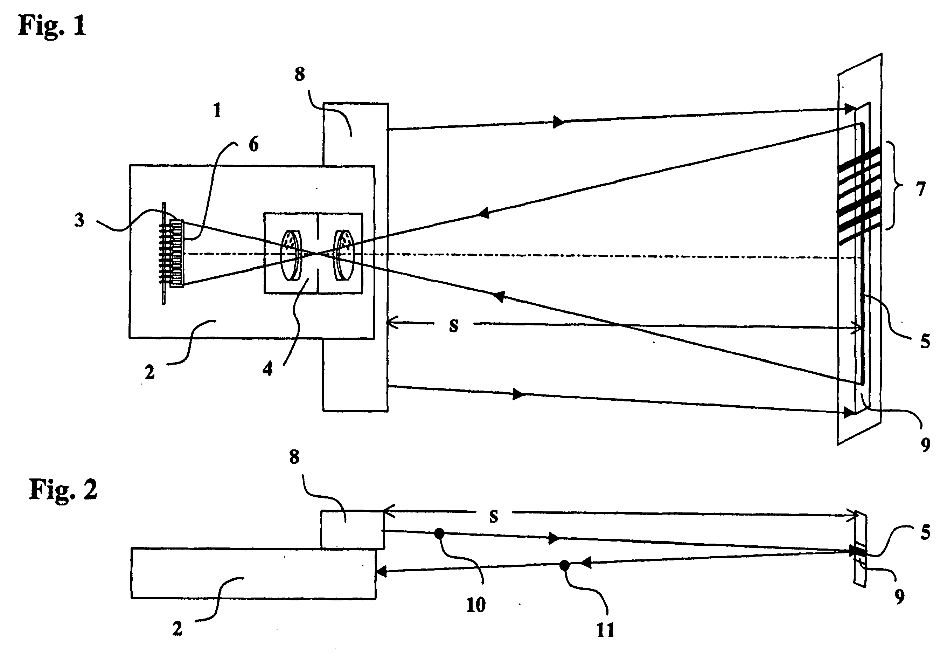

Gemäß Fig. 1 besitzt der Scanner 1 in einem Gehäuseteil 2 eine linienförmige Anordnung von mehreren Photoempfängem 3. Diese Anordnung der Photoempfänger 3 ist als ein ortsauflösender Detektor ausgebildet, insbesondere als eine CCD-Unie oder CMOS-Linie. Eine ebenfalls im Gehäuseteil 2 eingebaute, schematisch dargestellte Empfangsoptik 4 entwirft ein Bild von einer in einem Leseabstand s vom Scanner entfernten Leselinie 5 auf der Oberfläche 6 der Anordnung der Photoempfänger 3. Somit wird ein Code 7, bestehend aus unterschiedlich stark remittierenden Kontrastmarken, auf den einzelnen Photoempfängern unterschiedliche Photoströme hervorrufen, so dass in einer nachgeschalteten Auswerteeinheit die im Code vorhandene Information erfasst werden kann.

Damit die auf den einzelnen Photoempfängem hervorgerufenen unterschiedlichen Photoströme schnell und sicher ausgewertet werden können ist es notwendig, dass auf der Leselinie 5 eine möglichst hohe Beleuchtungsstärke vorhanden ist. Um dies zu erreichen, befinden sich in einem weiteren Gehäuseteil 8 mehrere im Wesentlichen punktförmige Lichtquellen, deren abgegebene Lichtstrahlung mittels einer erfindungsgemäßen anamorphotischen Beleuchtungsoptik eine Beleuchtungslinie 9 ausleuchten.

Wie in der Seitenansicht der Fig. 2 aufgezeigt, überlagern sich im Leseabstand s die Leselinie 5 und die Beleuchtungslinie 9. Dies wird dadurch erreicht, dass die optische Achse 10 der Beleuchtungsoptik in der Meridionalebene mit der optischen Achse 11 der Empfangsoptik einen Winkel bilden. Wird der Scanner bei dieser V-förmigen Anordnung nur in einem fest vorgegebenen Leseabstand s betrieben, so können die Gehäuseteile 2 und 8 fest miteinander verbunden sein, bzw. aus einem gemeinsamen Gehäuse bestehen.
Um jedoch unterschiedlich große Leseabstände s zwischen dem Scanner und der Leselinie 5 einstellen zu können kann es vorgesehen sein, das Gehäuse 2 mit der Empfangsoptik und den Photoempfängem sowie das Gehäuse 8 mit den Lichtquellen und der erfindungsgemäßen anamorphotischen Beleuchtungsoptik in verschiedenen Winkelpositionen justierbar miteinander mechanisch zu verbinden.

Sollte die Aufgabenstellung diese V-förmige Anordnung jedoch nicht zulassen, ist es ebenfalls möglich, zum Beispiel über einen hier nicht dargestellten teildurchlässigen Spiegel die Beleuchtung und den Empfang in einer echten Autokollimation anzuordnen.

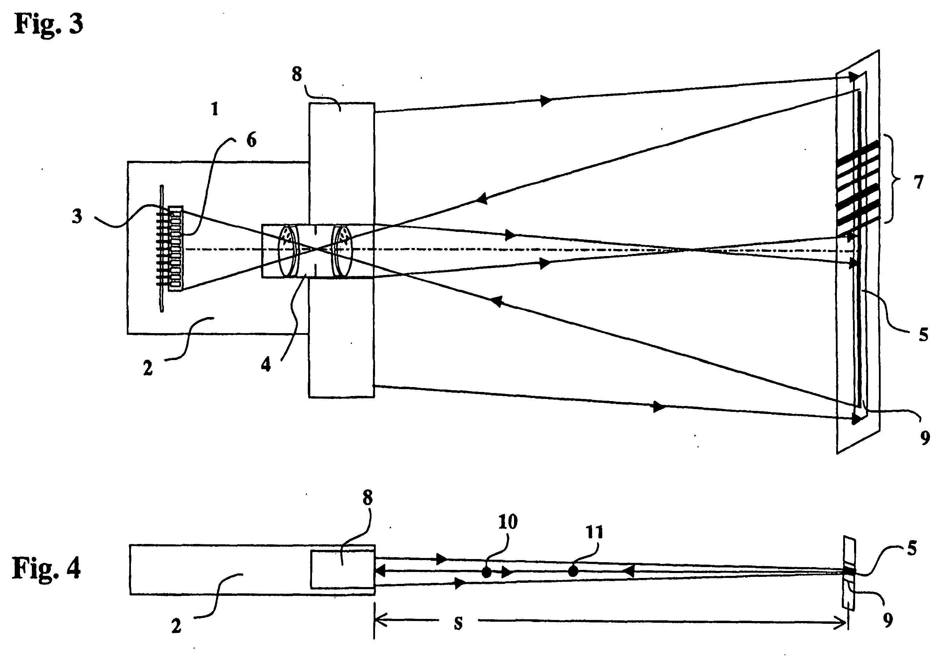

In Fig. 3 ist eine bevorzugte Ausführungsform des Scanners dargestellt, bei welcher die im Gehäuseteil 8 eingebaute anamorphotische Beleuchtungsoptik koplanar mit den Photoempfängern 3 und der Empfangsoptik 4 angeordnet ist.

Der Vorteil dieser koplanaren Anordnung, insbesondere bei unterschiedlichem Leseabstand s, wird deutlich aus der in Fig. 4 dargestellten Seitenansicht. Da hier die optische Achse 10 der Beleuchtungsoptik in der Meridionalebene mit der optischen Achse 11 der Empfangsoptik in einer Ebene liegen, ist eine Symmetrie der leselinie 5 mit der Beleuchtungslinie 9 über einen großen Leseabstand s vorhanden.

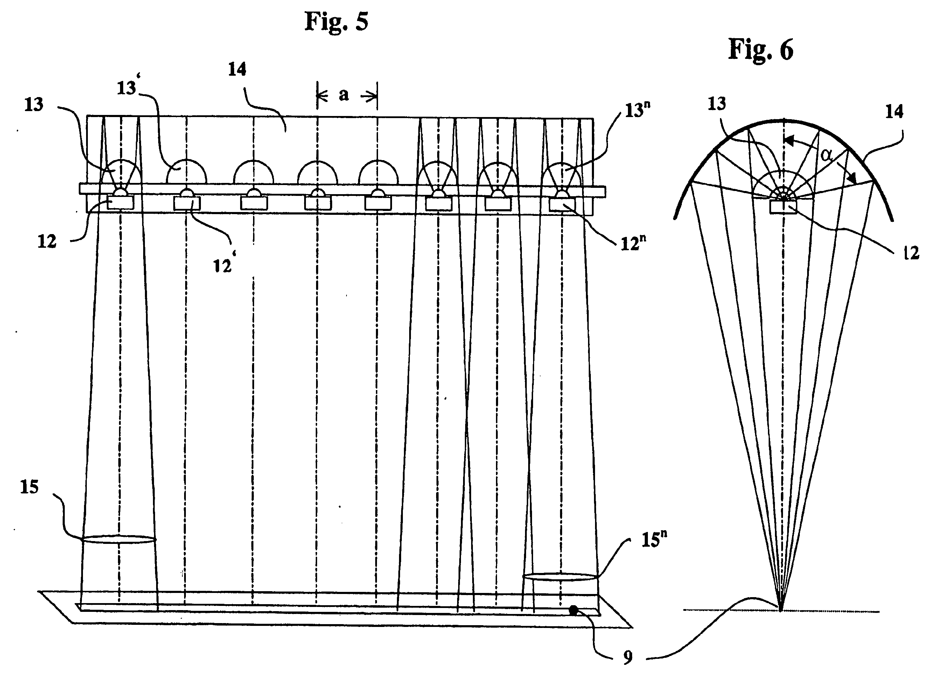

In Fig. 5, einem Schnitt durch die anamorphotische Beleuchtungsoptik in der Meridionalebene, sind mehrere im Wesentlichen punktförmige Lichtquellen 12, 12', bis 12ⁿ, insbesondere LED's, zu sehen, die zeilenförmig zueinander versetzt um den Abstand a angeordnet sind. Die abgegebene Strahlung wird von jeweils einer kurzbrennweitigen torischen Konvexlinse 13, 13', bis 13ⁿ in der Meridionalebene derart fokussiert, dass der weitere Strahlverlauf in dieser Ebene nur noch einen leicht divergenten Charakter aufweist. Dabei ist es möglich, die Vielzahl der torischen Konvexlinsen 13, 13', bis 13ⁿ mit Hilfe einer Kunststoffspritzform oder als Glaspressling einstückig herzustellen, um dadurch die Justage und Montage der Beleuchtungsoptik zu vereinfachen. Nach einer Strahlumlenkung an einem sich über alle Lichtquellen 12, 12', bis 12ⁿ erstreckenden Hohlzylinderspiegel 14 werden die einzelnen Teilstrahlbündel 15, bis 15ⁿ zur Beleuchtungslinie 9 gerichtet. Durch die von den torischen Konvexlinsen 13, 13', bis 13ⁿ bestimmte Divergenz der einzelnen Teilstrahlbündel 15, bis 15ⁿ überlappen sich in der Ebene der Beleuchtungslinie 9 die Teilbeleuchtungslinien derart, dass trotz der im Wesentlichen gausförmigen Energieverteilung der Teilbeleuchtungslinien eine gemeinsame Beleuchtungslinie 9 mit annähernd homogenem Energieverlauf vorhanden ist.

Fig. 6 zeigt im sagittalen Profilquerschnitt der anamorphotischen Beleuchtungsoptik eine punktförmige Lichtquelle 12 sowie den Querschnitt der torischen Konvexlinse 13 in einer gegenüber Fig. 3 rechtwinkligen Schnittrichtung. Es ist zu erkennen, dass es sich dabei in erster Näherung um eine gebogene Scheibe konstanter Mittendicke handelt, deren optische Brechkraft demzufolge sehr gering ist. Aus diesem Grunde wird die Strahlung der Lichtquellen ohne wesentliche Richtungsänderung auf die Oberfläche des Hohlzylinderspiegels 14 auftreffen. Der Hohlzylinderspiegel 14 ist so dimensioniert, dass die daran reflektierte Strahlung in dieser Sagittalebene auf der Beleuchtungslinie 9 fokussiert ist.

Die im Fokus erzeugte Breite der Beleuchtungslinie 9 ist somit über die Brennweite der Zylinderoptik sowie der objekt- und bildseitigen Schnittweiten beeinflussbar.

Wenn eine hohe numerische Apertur gewählt wird, d. h. der Sinus des halben Öffnungswinkels α gegen 1 geht, ist es von Vorteil, den kreisförmigen Querschnitt des Hohlzylinderspiegels 14 mit einer parabolischen Kontur auszubilden.

Die optische Funktion des Hohlzylinderspiegels 14 ist auch mit einer durchgehenden plan-, konkav- oder bikonvexen Zylinderlinse herstellbar. In diesem Fall erfährt der Strahlverlauf von den Lichtquelle 12, 12', bis 12ⁿ zur Beleuchtungslinie 9 keine Strahlumkehr, jedoch vergrößert sich gegebenenfalls die Baulänge der Beleuchtungsoptik.

## Patentansprüche

1. Scanner (1), insbesondere zur Erfassung von ein- und/oder von zweidimensionalen Codes mit einer Empfangsoptik, die das Bild einer Leselinie (5) auf einer linienförmigen Anordnung von mehreren Photoempfängern (3) entwirft und einer anamorphotischen Beleuchtungsanordnung, mit der die gesamte Leselinie linienförmig mit mehreren nebeneinander in eine Linie angeordneten im Wesentlichen punktförmigen Lichtquellen (12, 12', 12") ausgeleuchtet wird, **dadurch gekennzeichnet, dass** die Beleuchtungsanordnung aus einem mindestens zweistufigen Abbildungssystem zusammengesetzt ist, welches in der Nähe jeder Lichtquelle eine kurzbrennweitige, torische Konvexlinse (13, 13', 13") zur Strahlformung in der Meridionalebene und nachfolgend eine gemeinsame langbrennweitige, in der Sagittalebene wirkende, refraktive Zylinder optik (14) aufweist.

2. Scanner nach Anspruch 1, **dadurch gekennzeichnet, dass** die in der Sagittalebene wirksame langbrennweitige Zylinderoptik aus einem Hohlzylinderspiegel mit rundem oder parabolischen Querschnitt besteht.

3. Scanner nach einem der vorhergehenden Ansprüche, **dadurch gekennzeichnet, dass** die anamorphotische Beleuchtungsoptik in der Meridionalebene und/oder in der Sagittalebene eine hohe numerische Apertur aufweist.

4. Scanner nach einem der vorhergehenden Ansprüche, **dadurch gekennzeichnet, dass** die kurzbrennweitigen, torischen Konvexlinsen der anamorphotischen Beleuchtungsoptik im Meridionalschnitt eine asphärische Kontur aufweisen.

5. Scanner nach einem der vorhergehenden Ansprüche, **dadurch gekennzeichnet, dass** die optischen Komponenten der anamorphotischen Beleuchtungsoptik zumindest teilweise diffraktive optische Elemente sind.

6. Scanner nach einem der vorhergehenden Ansprüche, **dadurch gekennzeichnet, dass** die diffraktiven optischen Elemente als Fresnel-Linsen ausgebildet sind.

7. Scanner nach einem der vorhergehenden Ansprüche, **dadurch gekennzeichnet, dass** über die Anzahl und die räumliche Dichte der Lichtquellen, zusammen mit den kurzbrennweitigen, torischen Konvexlinsen die Gesamtlänge der Beleuchtungslinie einstellbar ist.

8. Scanner nach einem der vorhergehenden Ansprüche, **dadurch gekennzeichnet, dass** die räumliche Dichte der Lichtquellen zusammen mit der Dimensionierung der kurzbrennweitigen, torischen Konvexlinsen so gewählt ist, dass die Beleuchtungsstärke in Längsrichtung der Beleuchtungslinie in etwa homogen verteilt ist.

9. Scanner nach einem der vorhergehenden Ansprüche, **dadurch gekennzeichnet, dass** über den Abbildungsmaßstab der in der Sagittalebene wirksamen Zylinderoptik die Breite der Beleuchtungslinie bestimmbar ist.

10. Scanner nach einem der vorhergehenden Ansprüche, **dadurch gekennzeichnet, dass** die anamorphotische Beleuchtungsoptik in der Meridionalebene einstückig als Linsenarray ausgebildet ist.

## Claims

1. Scanner (1), in particular for detecting one- and/or two-dimensional codes, comprising a reception optics which projects the image of a reading line (5) onto a linear arrangement of a number of photoreceivers (3), and an anamorphic illumination arrangement with the aid of which the entire reading line is illuminated linearly by a number of substantially punctiform light sources (12, 12', 12ⁿ) arranged next to one another in a line, **characterized in that** the illumination arrangement is composed of an at least two-stage imaging system which has in the vicinity of each light source a short focal length toroidal convex lens (13, 13', 13ⁿ) for the purpose of beam shaping in the meridional plane and, downstream thereof, a common long focal length refractive cylindrical optics (14) acting in the sagittal plane.

2. Scanner according to Claim 1, **characterized in that** the long focal length cylindrical optics acting in the sagittal plane comprises a hollow cylindrical mirror having a round or parabolic cross section.

3. Scanner according to one of the preceding claims, **characterized in that** the anamorphic illumination optics has a high numerical aperture in the meridional plane and/or in the sagittal plane.

4. Scanner according to one of the preceding claims, **characterized in that** the short focal length, toroidal convex lenses of the anamorphic illumination optics have an aspheric contour in the meridional section.

5. Scanner according to one of the preceding claims, **characterized in that** the optical components of the anamorphic illumination optics are at least partially diffractive optical elements.

6. Scanner according to one of the preceding claims, **characterized in that** the diffractive optical elements are designed as Fresnel lenses.

7. Scanner according to one of the preceding claims, **characterized in that** the overall length of the illumination line can be set via the number and the spatial density of the light sources, together with the short focal length, toroidal convex lenses.

8. Scanner according to one of the preceding claims, **characterized in that** the spatial density of the light sources is selected together with the dimensioning of the short focal length, toroidal convex lenses such that the illumination level is approximately homogeneously distributed in the longitudinal direction of the illumination line.

9. Scanner according to one of the preceding claims, **characterized in that** the width of the illumination line can be determined via the imaging scale of the cylindrical optics active in the sagittal plane.

10. Scanner according to one of the preceding claims, **characterized in that** the anamorphic illumination optics is designed in one piece as a lens array in the meridional plane.

## Revendications

1. Scanneur (1), destiné notamment à la saisie de codes à une et/ou à deux dimensions, comportant une optique de réception qui projette l'image d'une ligne de lecture (5) sur un agencement en forme de lignes de plusieurs photorécepteurs (3), et un dispositif d'éclairage anamorphoseur, avec lequel l'ensemble de la ligne de lecture est éclairé en forme de lignes par plusieurs sources lumineuses (12, 12', 12ⁿ) sensiblement ponctuelles disposées côte à côte sur une ligne, **caractérisé en ce que** le dispositif d'éclairage est constitué d'un système de reproduction à au moins deux étages, comportant à proximité de chaque source lumineuse une lentille convexe torique (13, 13', 13ⁿ) à courte distance focale pour la formation du faisceau dans le plan méridien, et ensuite une optique cylindrique (14) de réfraction commune à longue distance focale agissant dans le plan sagittal.

2. Scanneur selon la revendication 1, **caractérisé en ce que** l'optique cylindrique à longue distance focale agissant dans le plan sagittal est constituée d'un miroir cylindrique creux de section transversale ronde ou parabolique.

3. Scanneur selon l'une des revendications précédentes, **caractérisé en ce que** l'optique de l'éclairage anamorphoseur dans le plan méridien et/ou dans le plan sagittal comporte une haute ouverture numérique.

4. Scanneur selon l'une des revendications précédentes, **caractérisé en ce que** les lentilles convexes toriques à courte distance focale de l'optique de l'éclairage anamorphoseur ont un contour non sphérique dans la coupe méridienne.

5. Scanneur selon l'une des revendications précédentes, **caractérisé en ce que** les composants optiques de l'optique de l'éclairage anamorphoseur sont, au moins partiellement, des éléments optiques de diffraction.

6. Scanneur selon l'une des revendications précédentes, **caractérisé en ce que** les éléments optiques de diffraction sont agencés sous la forme de lentilles de Fresnel.

7. Scanneur selon l'une des revendications précédentes, **caractérisé en ce que** la longueur totale de la ligne d'éclairage est réglable par l'intermédiaire du nombre et de la densité dans l'espace des sources lumineuses conjointement avec les lentilles convexes toriques à courte distance focale.

8. Scanneur selon l'une des revendications précédentes, **caractérisé en ce que** la densité dans l'espace des sources lumineuses, et le dimensionnement des lentilles convexes toriques à courte distance focale, sont choisis de telle sorte que l'intensité de l'éclairage soit sensiblement répartie de façon homogène dans la direction longitudinale de la ligne d'éclairage.

9. Scanneur selon l'une des revendications précédentes, **caractérisé en ce que** la largeur de la ligne d'éclairage peut être définie par l'intermédiaire de l'échelle de reproduction de l'optique cylindrique agissant dans le plan sagittal.

10. Scanneur selon l'une des revendications précédentes, **caractérisé en ce que** l'optique de l'éclairage anamorphoseur dans le plan méridien est réalisée d'un seul tenant en tant que réseau de lentilles.
